# EUROPEAN PATENT SPECIFICATION

(11) **EP 3 504 956 B1**
(45) Date of publication and mention of the grant of the patent: **08.07.2020**
(21) Application number: 18214471.7
(22) Date of filing: 20.12.2018
(51) Int. Cl.: A01D 34/82, A01D 34/81, A01D 34/64

(54) **PROTECTION FRAME FOR LAWNMOWERS WITH AN INCLINABLE CUTTING PLATE**
SCHUTZRAHMENANORDNUNG FÜR RASENMÄHER MIT EINER NEIGBAREN SCHNEIDPLATTE
CADRE DE PROTECTION POUR TONDEUSES AYANT UNE PLAQUE DE COUPE INCLINABLE

(30) Priority: 28.12.2017 IT 201700150379
(43) Date of publication of application: 03.07.2019
(73) Proprietor: Stiga S.p.A. in breve anche St. S.p.A., 31033 Castelfranco Veneto (TV) (IT)
(72) Inventor: FOSCARO, Carlo, 31050 Casacorba di Vedelago (IT); SUSIN, Eddi, 31050 VEDELAGO (TV) (IT); SOLIGO, Andrea, 31033 SAN FLORIANO DI CASTELFRANCO VENETO (TV) (IT); BASTASIN, Franco, 31100 TREVISO (IT)
(74) Representative: Mittler, Andrea

(56) References cited:
- US-A1- 2007 051 086
- US-A1- 2012 266 580
- US-B1- 7 451 586
- US-B1- 7 735 305

## Description

The present invention relates to a protection frame for lawnmowers with an inclinable cutting plate.

Tractor lawnmowers are known which comprise a cutting plate separably associated with the front part of a tractor. This makes it possible to associate different types of cutting plates with the same tractor according to needs, e.g. a cutting plate with multiple cutting blades connected by drive belts.

After several working sessions, the need arises to clean the cutting area without separating the cutting plate from the tractor.

Normally, the cutting plate is raised by grasping it by its front part, inducing a 40°-60° rotation so as to make the cutting zone accessible, leaving the tractor stationary with the wheels resting on the ground.

Systems are known which make it possible to keep the cutting plate in raised and inclined position.

For safety reasons, it is necessary to provide a coverage of the mechanical means that allow the rotation of the cutting blades and of the cutting blade themselves.

At the same time, it is appropriate that in case of malfunction said mechanical means, in particular the drive belt, be easily accessible by an operator to facilitate repair.

In the case of cutting plates associated with tractors, the problem arises that in inclined position the part of the cutting plate closest to the front of the tractor is crushed onto it.

US-7469525 describes a lawnmower equipped with a cutting plate under it between the rear and front wheels, comprising a flexible protection material of movable parts, such as a motion drive belt.

US-2004/0011013 describes a lawnmower with a plurality of rigid frame portions which can be opened independently so as to expose various mechanisms.

US-7451586 describes a protection frame simultaneously associated both with a cutting plate and with a tractor.

It is the object of the present invention to manufacture a protection frame for a lawnmower provided with an inclinable cutting plate separably associated with the tractor.

It is a further object of the present invention that said protection frame performs its protective function regardless of the position of the cutting plate with respect to the tractor.

It is a yet other object of the present invention that said protection frame is associated both with the cutting plate and with the tractor in a simple manner.

According to the invention, said and other objects are achieved by a protection frame as defined in claim 1.

Advantageously, the claimed frame allows to protect the operator from contact with dangerous mechanical movable parts while ensuring an easy lifting of the cutting plate for washing it.

The operator always works safely and can still perform maintenance work because the frame consists of modular portions.

The deformability of the fabric portion allows any rotation of the cutting plate with respect to the tractor.

These and other features of the present invention will be more apparent from the following detailed description of a practical embodiment thereof, shown by way of non-limiting example in the accompanying drawings, in which:
figure 1 shows a perspective view of a protection frame for a lawnmower according to the present invention;
figure 2 shows an exploded perspective view of the frame;
figure 3 shows a top plan view of a tractor with a cutting plate in lowered position;
figure 4 shows a top plan view of the tractor with the cutting plate in raised position;
figure 5 shows a section view taken along line V-V of figure 3 with a portion enlarged in circle A;
figure 6 shows a section view taken along line VI-VI of figure 4 with a portion enlarged in circle B;
figure 7 shows a top plan view of the tractor with the cutting plate in lowered position.

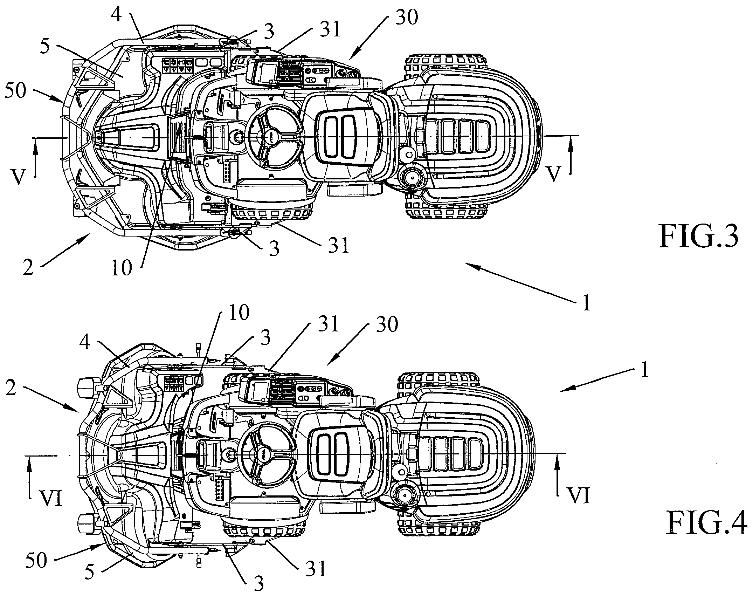

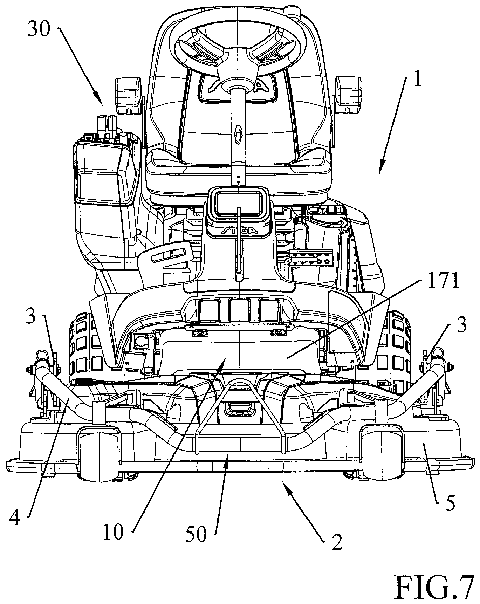

A lawnmower 1 comprises a tractor 30 and a cutting plate 2 (Figures 3-7).

The cutting plate 2 is separably coupled to front attachments 31 of the tractor 30 by means of respective levers 3.

The levers 3 once fixed to the respective attachments 31 remain integral with the tractor 30.

Said levers 3 are rotatably associated with a tubular element 4 of the plate 2.

The plate 2 further comprises a body 5 to which said tubular element 4 is fixed, and to which are rotatably associated rotors 22 to which are inferiorly fixed respective cutting blades 23.

The whole of the body 5 and of the tubular element 4 forms a frame 50 of the cutting plate 2 of the lawnmower 1.

The lawnmower 1 comprises a protection frame 10 associated with both the cutting plate 2 and the tractor 30.

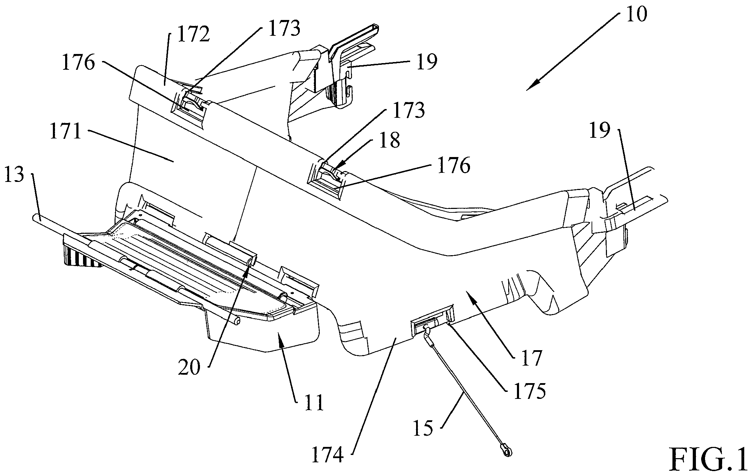

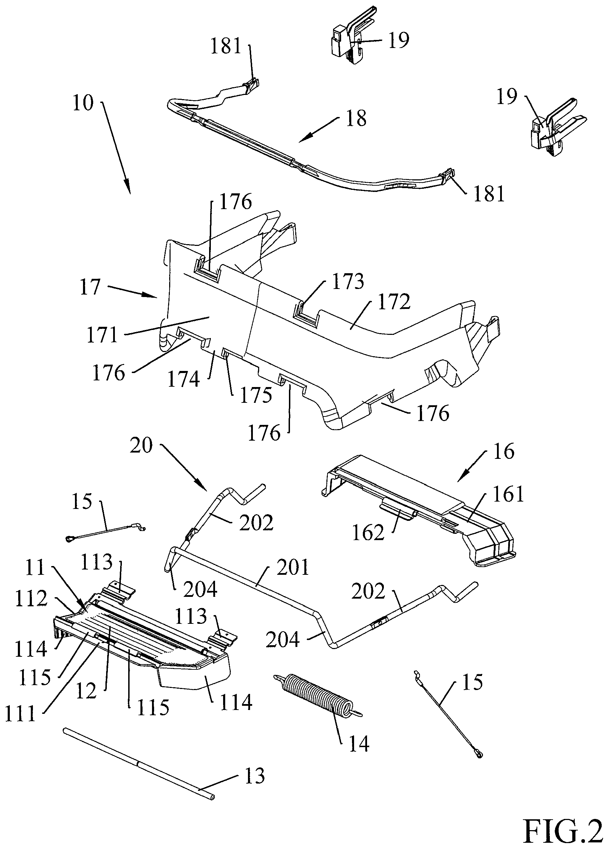

The frame 10 (Figures 1, 2) comprises a first plastic portion 11 with over-injected rubber 12, a steel rod 13 which can be coupled to a front part 111 of said plastic portion 11 and with the frame 50 of the cutting plate 2, a return spring 14 and a pair of return cables 15 to the frame 50 of the cutting plate 2.

The frame 10 further comprises a shaped structure 20, preferably metallic, more preferably made of steel, a second plastic portion 16 reinforced with magnesium silicate, a fabric portion 17, a third plastic portion 18 reinforced with glass fibers and plastic hooks 19 for said third plastic portion 18.

The first plastic portion 11 has an upper plane 112, preferably concave, on which the rubber 12 is injected, two side closing portions 114, two rear attachments 113 adapted to rotatably couple to the shaped structure 20, and two front attachments 115 adapted to rotatably couple to the metal rod 13.

The shaped structure 20, in one piece, comprises a rectilinear central portion 201 and two side portions 202 connected to said rectilinear central portion 201 by means of two fittings 204.

The second plastic portion 16 has a substantially flat central portion 161 reinforced with magnesium silicate and an attachment 162 adapted to be rotatably coupled to the shaped structure 20.

Both the rear attachments 113 and the attachment 162 are adapted to rotatably couple to the central portion 201 of the shaped structure 20 in different positions.

The fabric portion 17 when extended (Figures 1, 5 and 7), i.e. if the cutting plate 2 is in the lowered position, shows a covering surface 171 with a lower edge 174 provided with through holes 175 adapted to house the shaped structure 20, and an upper edge 172 provided with through holes 173 adapted to house the third plastic portion 18.

Said through holes 173, 175 are in axis with the edges 172, 174 and follow one another along said edges 172, 174 interrupted by openings 176.

The third plastic portion 18 comprises two attachments 181 adapted to couple to respective plastic hooks 19 which are fixed to the tractor 30.

The frame 10 is mounted as follows.

The metal rod 13 allows to rotatably associate the first plastic portion 11 with the frame 50 of the cutting plate 2. The first plastic portion 11 can therefore rotate with respect to the cutting plate 2.

The shaped structure 20 rotatably associates both the second plastic portion 16 and the fabric portion 17 with the first plastic portion 11.

The attachment 162 of the second plastic portion 16 is in front position so as to be covered by the fabric portion 17 after coupling.

The fabric portion 17 is associated with the tractor 30 by means of the third plastic portion 18.

The through holes 173, 175 are such as to allow adaptation movements of the fabric portion 17 both with respect to the shaped structure 20 and with respect to the third plastic portion 18 which is fixed to the tractor 30.

The return cables 15 comprise one end rotatably coupled to respective side portions 202 of the shaped structure 20 and an end fastened to the ends of the spring 14.

The assembly formed by the return cables 15 and the spring 14 allows to accommodate variations in the height of the cutting plate 2 without exposing the moving organs. The return cables 15 turn around portions of the frame 50 so that the spring 14 remains between said frame portions 50.

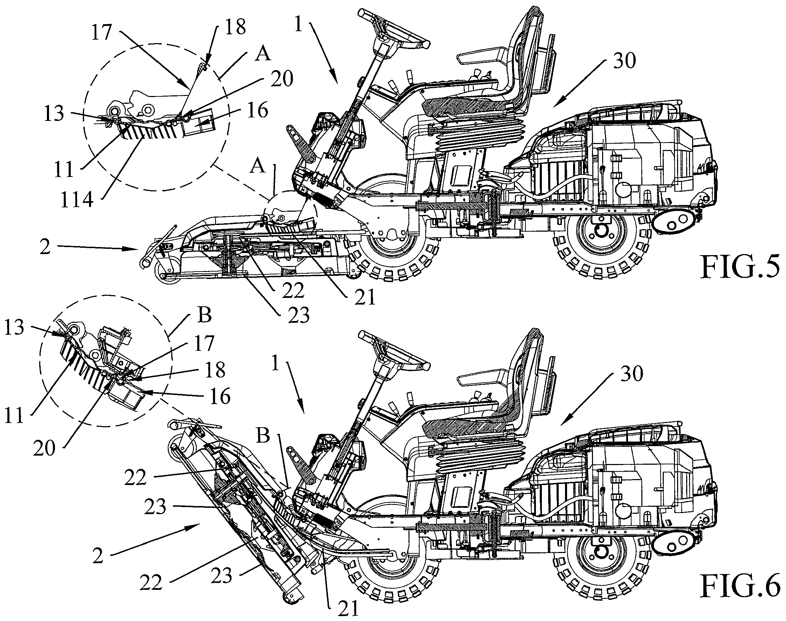

Operatively, after mounting the frame 10 to the lawnmower 1, it is possible to observe that the frame 10 offers a continuous protection of the transmission members in the passage from the lowered position to the raised position of the cutting plate 2 (figures 5, 6), without having to remove the protection to reach the washing position.

The fabric portion 17 crumples up after approaching the first plastic portion 16 determined by the rotary connection by means of the shaped structure 20.

A motion drive belt 21 which runs from the tractor 30 to a rotor 22 of the cutting plate 2 is always covered to protect the operator.

Access to said belt 21 for maintenance operations is very simple: when the cutting plate 2 is in the lowered position, it is sufficient to dissociate the metal rod 13 from the frame 50 of the cutting plate 2 and possibly disconnect the attachments 181 using a minimum number of tools. The first plastic portion 16 is thus rotatable around the shaped structure 20 and the fabric portion 17 can be crushed onto the shaped structure 20 itself.

Advantageously, the frame 10 allows to protect the operator from contact with dangerous mechanical movable parts while guaranteeing an easy lifting of the cutting plate 2 for washing it without removing the protections.

The operator always works safely and can still perform maintenance work because the frame 10 consists of modular portions substantially hinged to one another.

The deformability of the fabric portion 17 allows any rotation of the cutting plate 2 with respect to the tractor 30.

The second plastic portion 16 allows to avoid the contact between the fabric portion 17 and the rotating parts when the fabric portion 17 is crumpled following the lifting of the cutting plate 2.

## Claims

1. Protection frame (10) for a lawnmower (1) comprising a cutting plate (2) and a tractor (30), said cutting plate (2) being separably associable and inclinable with respect to the tractor (30), said protection frame (10) being simultaneously associable both to the cutting plate (2) and to the tractor (30),
**characterized by** comprising
a first plastic portion (11), a second plastic portion (16) and a third plastic portion (18),
connecting means (13) that can be rotatably coupled with said first plastic portion (11) and with the cutting plate (2),
a shaped structure (20) and a fabric portion (17), said shaped structure (20) being rotatably associated with said first plastic portion (11), with said fabric portion (17) and with said second plastic portion (16),
said third plastic portion (18) being adapted to rotatably associate said fabric portion (17) with the tractor (30).

2. Protection frame (10) according to claim 1, **characterized in that** the fabric portion (17) comprises a covering surface (171) with a lower edge (174) provided with through holes (175) suitable for housing the shaped structure (20), and an upper edge (172) provided with through holes (173) suitable for housing the third plastic portion (18), said through holes (175, 173) being in axis with the lower and upper edges (174, 172).

3. Protection frame (10) according to claim 2, **characterized in that** the lower and upper edges (174, 172) of the fabric portion (17) are interrupted by openings (176) for mounting.

4. Protection frame (10) according to any one of the preceding claims, **characterized in that** it comprises return cables (15) comprising an end hooked to the shaped structure (20), and an end hooked to the ends of a return spring (14).

5. Protection frame (10) according to any of the previous claims, **characterized in that** the shaped structure (20), in one piece, comprises a rectilinear central portion (201) and two side portions (202) connected to said rectilinear central portion (201) through two fittings (204).

6. Protection frame (10) according to any of the previous claims, **characterized in that** the first plastic portion (11) is provided with an upper plane (112) with rubber (12), two side closing portions (114), two rear couplings (113) adapted to be rotatably coupled with the shaped structure (20), and two front attachments (115) adapted to be rotatably coupled with said connecting means (13).

7. Protection frame (10) according to any one of the previous claims, **characterized in that** the second plastic portion (16) is provided with a central portion (161) reinforced with magnesium silicate, and an attachment (162) adapted to be rotatably coupled with the shaped structure (20).

8. Protection frame (10) according to any of the previous claims, **characterized in that** the third plastic portion (18) comprises two attachments (181) adapted to be coupled with respective hooks (19) which are fixed to the tractor (30).

9. Protection frame (10) according to any one of the preceding claims, **characterized in that** said connecting means (13) have the shape of a metal rod.

10. Protection frame (10) according to any of the previous claims, **characterized in that** said shaped structure (20) is made of metallic material.

## Patentansprüche

1. Schutzrahmen (10) für einen Rasenmäher (1), der eine Schneidplatte (2) und einen Traktor (30) aufweist, wobei die Schneidplatte (2) mit dem Traktor (30) lösbar verbunden sowie in Bezug auf diesen geneigt werden kann, wobei der Schutzrahmen (10) gleichzeitig sowohl mit der Schneidplatte (2) als auch mit dem Traktor (30) verbunden sein kann,
**dadurch gekennzeichnet, dass** er Folgendes aufweist:
einen ersten Kunststoffbereich (11), einen zweiten Kunststoffbereich (16) und einen dritten Kunststoffbereich (18),
eine Verbindungseinrichtung (13), die mit dem ersten Kunststoffbereich (11) und mit der Schneidplatte (2) rotationsbeweglich gekoppelt werden kann,
eine geformte Struktur (20) und einen Gewebebereich (17), wobei die geformte Struktur (20) mit dem ersten Kunststoffbereich (11), mit dem Gewebebereich (17) und mit dem zweiten Kunststoffbereich (16) rotationsbeweglich verbunden ist,
wobei der dritte Kunststoffbereich (18) dazu ausgebildet ist, den Gewebebereich (17) mit dem Traktor (30) rotationsbeweglich zu verbinden.

2. Schutzrahmen (10) nach Anspruch 1,
**dadurch gekennzeichnet, dass** der Gewebebereich (17) eine Abdeckfläche (171) mit einem unteren Rand (174) aufweist, der mit Durchgangsöffnungen (175) versehen ist, die zum Aufnehmen der geformten Struktur (20) geeignet sind, sowie mit einem oberen Rand (172) aufweist, der mit Durchgangsöffnungen (173) versehen ist, die zum Aufnehmen des dritten Kunststoffbereichs (18) geeignet sind, wobei die Durchgangsöffnungen (175, 173) mit dem oberen und dem unteren Rand (174, 172) axial ausgerichtet sind.

3. Schutzrahmen (10) nach Anspruch 2,
**dadurch gekennzeichnet, dass** der obere und der untere Rand (174, 172) des Gewebebereichs (17) durch Öffnungen (176) zur Montage unterbrochen sind.

4. Schutzrahmen (10) nach einem der vorhergehenden Ansprüche,
**dadurch gekennzeichnet, dass** er Rückstellkabel (15) aufweist, die mit einem Ende an der geformten Struktur (20) eingehakt sind und mit einem Ende an den Enden einer Rückstellfeder (14) eingehakt sind.

5. Schutzrahmen (10) nach einem der vorhergehenden Ansprüche,
**dadurch gekennzeichnet ist, dass** die geformte Struktur (20) in einem Stück einen geradlinigen Mittelbereich (201) und zwei Seitenbereiche (202) aufweist, die mit dem geradlinigen Mittelbereich (201) durch zwei Passstücke (204) verbunden sind.

6. Schutzrahmen (10) nach einem der vorhergehenden Ansprüche,
**dadurch gekennzeichnet, dass** der erste Kunststoffbereich (11) mit einer oberen Ebene (112) mit Gummi (12), zwei seitlichen Schließbereichen (114), zwei hinteren Kopplungseinrichtungen (113), die zur rotationsbeweglichen Kopplung mit der geformten Struktur (20) ausgebildet sind, sowie zwei vorderen Befestigungseinrichtungen (115) versehen ist, die zur rotationsbeweglichen Kopplung mit der Verbindungseinrichtung (13) ausgebildet sind.

7. Schutzrahmen (10) nach einem der vorhergehenden Ansprüche,
**dadurch gekennzeichnet ist, dass** der zweite Kunststoffbereich (16) mit einem mit Magnesiumsilikat verstärkten Mittelbereich (161) und einer Befestigungseinrichtung (162) versehen ist, die zur rotationsbeweglichen Kopplung mit der geformten Struktur (20) ausgebildet ist.

8. Schutzrahmen (10) nach einem der vorhergehenden Ansprüche,
**dadurch gekennzeichnet, dass** der dritte Kunststoffbereich (18) zwei Befestigungseinrichtungen (181) aufweist, die zur Kopplung mit jeweiligen Haken (19) ausgebildet sind, die an dem Traktor (30) befestigt sind.

9. Schutzrahmen (10) nach einem der vorhergehenden Ansprüche,
**dadurch gekennzeichnet ist, dass** die Verbindungseinrichtungen (13) die Form einer Metallstange aufweisen.

10. Schutzrahmen (10) nach einem der vorhergehenden Ansprüche,
**dadurch gekennzeichnet ist, dass** die geformte Struktur (20) aus metallischem Material gebildet ist.

## Revendications

1. Cadre de protection (10) pour une tondeuse (1) comprenant une plaque de coupe (2) et un tracteur (30), ladite plaque de coupe (2) étant séparément associable et inclinable par rapport au tracteur (30), ledit cadre de protection (10) étant simultanément associable à la fois à la plaque de coupe (2) et au tracteur (30),
**caractérisé en ce qu'**il comprend
une première portion en plastique (11), une seconde portion en plastique (16) et une troisième portion en plastique (18),
un moyen de connexion (13) qui peut être couplé en pouvant tourner avec ladite première portion en plastique (11) et avec la plaque de coupe (2),
une structure façonnée (20) et une portion de tissu (17), ladite structure façonnée (20) étant associée en pouvant tourner avec ladite première portion en plastique (11), avec ladite portion de tissu (17) et avec ladite seconde portion en plastique (16),
ladite troisième portion en plastique (18) étant adaptée pour associer en pouvant tourner ladite portion de tissu (17) avec le tracteur (30).

2. Cadre de protection (10) selon la revendication 1, **caractérisé en ce que** la portion de tissu (17) comprend une surface couvrante (171) avec un bord inférieur (174) muni de perforations traversantes (175) approprié pour loger la structure façonnée (20), et un bord supérieur (172) muni de perforations traversantes (173) approprié pour loger la troisième portion en plastique (18), lesdites perforations traversantes (175, 173) étant en axe avec les bords inférieur et supérieur (174, 172).

3. Cadre de protection (10) selon la revendication 2, **caractérisé en ce que** les bords inférieur et supérieur (174, 172) de la portion de tissu (17) sont interrompus par des ouvertures (176) pour le montage.

4. Cadre de protection (10) selon l'une quelconque des revendications précédentes, **caractérisé en ce qu'**il comprend des câbles de retour (15) comprenant une extrémité accrochée à la structure façonnée (20), et une extrémité accrochée aux extrémités d'un ressort de rappel (14).

5. Cadre de protection (10) selon l'une quelconque des revendications précédentes, **caractérisé en ce que** la structure façonnée (20), en une pièce, comprend une portion centrale rectiligne (201) et deux portions latérales (202) connectées à ladite portion centrale rectiligne (201) par l'intermédiaire de deux raccords (204).

6. Cadre de protection (10) selon l'une quelconque des revendications précédentes, **caractérisé en ce que** la première portion en plastique (11) est munie d'un plan supérieur (112) avec du caoutchouc (12), de deux portions de fermeture latérales (114), de deux couplages arrière (113) adaptés pour être couplés en pouvant tourner avec la structure façonnée (20), et de deux fixations avant (115) adaptées pour être couplées en pouvant tourner avec ledit moyen de connexion (13).

7. Cadre de protection (10) selon l'une quelconque des revendications précédentes, **caractérisé en ce que** la seconde portion en plastique (16) est munie d'une portion centrale (161) renforcée avec du silicate de magnésium, et d'une fixation (162) adaptée pour être couplée en pouvant tourner avec la structure façonnée (20).

8. Cadre de protection (10) selon l'une quelconque des revendications précédentes, **caractérisé en ce que** la troisième portion en plastique (18) comprend deux fixations (181) adaptées pour être couplées avec des crochets respectifs (19) qui sont fixés au tracteur (30).

9. Cadre de protection (10) selon l'une quelconque des revendications précédentes, **caractérisé en ce que** ledit moyen de connexion (13) présente la forme d'une barre en métal.

10. Cadre de protection (10) selon l'une quelconque des revendications précédentes, **caractérisé en ce que** ladite structure façonnée (20) est constituée de matériau métallique.
